# EUROPEAN PATENT SPECIFICATION

(11) **EP 1 791 663 B1**
(45) Date of publication and mention of the grant of the patent: **03.11.2010**
(21) Application number: 05791494.7
(22) Date of filing: 19.08.2005
(51) Int. Cl.: B21D 28/32, B21J 9/18

(54) **UNIVERSAL CAM SLIDE**
UNIVERSALGLEITNOCKEN
COULISSEAU DE CAMES UNIVERSELLES

(30) Priority: 15.09.2004 US 941730
(43) Date of publication of application: 06.06.2007
(73) Proprietor: Anchor Lamina America, Inc., Farmington, MI 48331 (US)
(72) Inventor: FIDZIUKIEWICZ, Erich, D., South Lyon, MI 48178 (US)
(74) Representative: Grünecker, Kinkeldey, Stockmair & Schwanhäusser Anwaltssozietät
(86) International application number: PCT/US2005/029759
(87) International publication number: WO 2006/036381

(56) References cited:
- WO-A-2005/028137
- US-A- 2 421 864
- US-A- 5 487 269
- US-A- 5 487 296
- US-A- 5 711 180
- US-A- 5 884 521

## Description

### BACKGROUND OF THE INVENTION

### 1. Field of the Invention

The invention relates generally to aerial and die-mount cams and more particularly to improvements in universal cams configured to facilitate their assembly using identical slides and other components that do not require custom fitting to provide slide movements within a wide range of angles.

### 2. Background Art

Aerial and die-mount cams are often used to operate tools for such manufacturing processes as punching, trimming, stamping and bending workpieces. These devices include elements that convert downward and upward forces provided by a press into laterally directed component forces that advance and retract a tool in lateral directions to effect the mentioned processes.

The wide variety of applications of the cams results in a proportional number of different component configurations to accommodate the demands made to move tools in required directions. Typically, the major components of a cam include an adapter assembly connected to one of a pair of platens of a press, a driver connected to the other of the pair of platens, and a slide positioned between the adapter assembly and the driver so that the slide is forced to advance and retract when the platens are forced together and apart, respectively.

US-A-5-487296, for example, discloses a universal cam unit for use in a power press comprising a driver assembly, a slide block to which the working tool is mounted, and a mounting bracket for coupling the slide block to the ram for movement therewith. The movement of the slide block brings the tool into engagement with a workpiece disposed between the pressure pad unit and the lower die to perform a desired operation. The components of the universal cam unit may be disassembled and selectively replaced, so that the unit may be quickly and easily adapted for use in a desired application.

The angle relative to the horizontal along which the slide is forced to move is that of the inclination of the driver. The slide and/or the adapter assembly must therefore be configured to accommodate the inclination of the driver. In view of this, the typical cam requires adapter assemblies and/or slides that have as many configurations as associated drivers have inclinations. It would therefore be advantageous from the standpoint of cost and time saved during the design, manufacture and assembly of cams to fabricate cams requiring slides and adapter assemblies, each of which having only one respective configuration, to provide slide motions in directions over a large range of angles. Similar advantages would result from fabricating cams requiring slides having only one configuration and adapter assemblies having only two configurations to provide slide motions over an additional range of angles.

### SUMMARY OF THE INVENTION

According to the present invention, it is suggested to provide universal aerial or die-mount cams having the features of claim 1.

In view of the foregoing object, the aerial and die-mount cams, which are basically inverted versions of each other, each include a slide and an adapter assembly arranged in vertically stacked relation. Between the slide and the adapter assembly are slidably arranged bearing surfaces for coupling the slide and the adapter assembly and for relative sliding movement upon closing and opening of platens of a press between which a cam can be arranged.

Additional bearing surfaces are arranged on the slide for relative sliding movement between the slide and a driver. The adapter assembly is angularly adjustable, continuously rather than incrementally, to accommodate a driver having a bearing surface ranging from being uninclined to the horizontal to being inclined at an acute angle.

The adapter assembly has a universal adapter for engaging and shifting the slide and also has a pair of opposing side plates. The universal adapter has an arcuate portion, and each side plate has an arcuate recess complementing the arcuate portion of the universal adapter. The arcuate recesses of the side plates receive the arcuate portion of the universal adapter and allow a desired angular adjustment of the universal adapter.

The slide may have surfaces arranged in a five-sided configuration that includes a central surface with a pair of laterally canted guiding surfaces along opposite edges of the central surface and a pair of oppositely laterally canted coupling surfaces along the outer edges of the guiding surfaces. The guiding surfaces may be disposed at a right angle to the coupling surfaces and at an obtuse angle to the central surface. The slide may also include a resilient member that is compressed when the slide is advanced and that expands to retract the slide.

The universal adapter may have surfaces arranged in a five-sided configuration complementing the five-sided configuration of the slide. The configuration may include a central surface opposed to the central surface of the slide, a pair of guiding surfaces along opposite edges of the central surface of the cam adapter opposed to the guiding surfaces of the slide, and a pair of coupling surfaces along the outer edges of the last mentioned guiding surfaces. The central surfaces may be disposed substantially perpendicularly to the direction of major loading forces on the slide and cam assembly. The universal adapter may also have a pair of keeper plates, each being secured to a different one of the pair of coupling surfaces of the slide. Each of the keeper plates may slidably overlap an opposing coupling surface of the universal adapter to connect the slide and universal adapter for conjoint movement.

The configurations of the aerial and die-mount cams described result in production and on-site assembly efficiencies that save costs and time while providing precision, stable and long-lasting cams capable of bearing heavy loads.

### BRIEF DESCRIPTION OF THE DRAWINGS

FIGURE 1 is an exploded, perspective view showing the front and a side of an aerial cam according to the present invention and illustrating a combination of a slide, an adapter assembly and a driver as well as a universal adapter and side plates of the adapter assembly;
FIGURE 2 is a perspective view similar to that of FIGURE 3, but showing the rear and the side of the aerial cam;
FIGURE 3 is perspective view of an aerial cam similar to that of FIGURE 1 and having an uninclined driver;
FIGURE 4 is a side view of the aerial cam of FIGURE 3, the cam being capable of adjustment to accept a driver having an incline within a range from zero to 30 degrees;
FIGURE 5 is a front view of the aerial cam of FIGURE 4; FIGURE 6 is a perspective view of the assembled cam of FIGURES 1 and 2.
FIGURE 7 is a side view of the aerial cam of FIGURE 6, the cam being capable of adjustment to accept a driver having an incline within a range from 30 to 50 degrees ; and
FIGURE 8 is a cross-sectional view, taken along line 8-8, of the aerial cam of FIGURE 6 and additionally shows a slide return spring bracket and a slide return bumper;
FIGURE 9 is a cross-sectional view, taken along the line 9-9, of a portion of the aerial cam of FIGURE 8;
FIGURE 10 is a cross-sectional-view, taken along the line 10-10, of a portion of the aerial cam of FIGURE 8; and
FIGURE 11 is a side view of an aerial cam similar to that of FIGURE 7 and additionally includes a ghost view of a segment of a universal adapter of the adapter assembly, the cam being capable of adjustment to accept a driver having an incline within a range from 50 to 60 degrees.

### DETAILED DESCRIPTION OF THE PREFERRED EMBODIMENTS

Although the drawing figures all represent aerial cams, it will be understood by those skilled in the art that the aerial cams shown can be converted to die-mount cams with little more effort than would be required to invert them. The following descriptions and definitions of aerial cams therefore apply as well to die-mount cams. It will also be understood that component surfaces referred to as central, guiding, and coupling surfaces and their associated wear plates serve, during at least a portion of each cam operation, as load bearing surfaces.

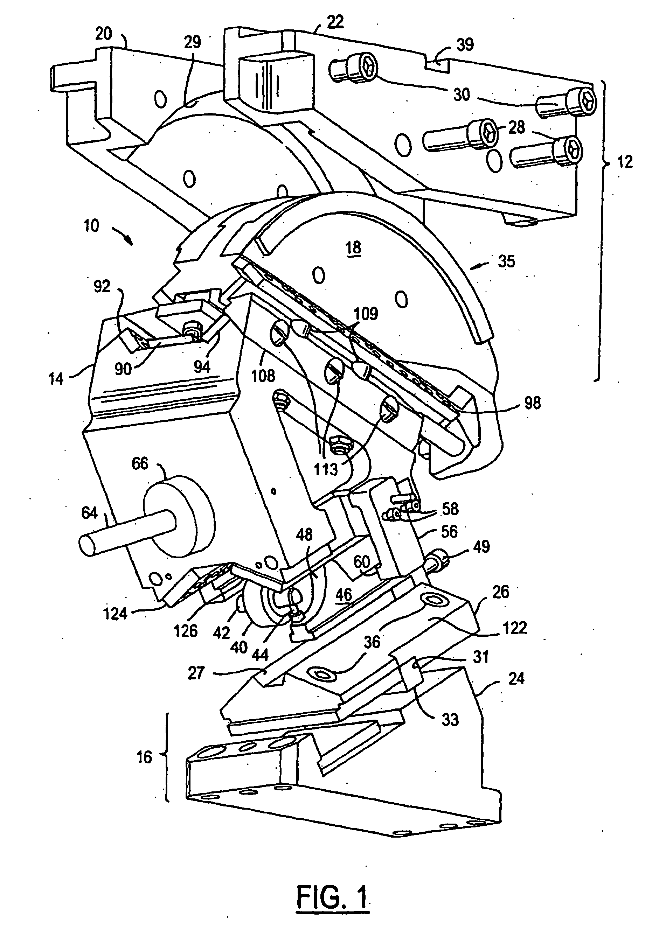

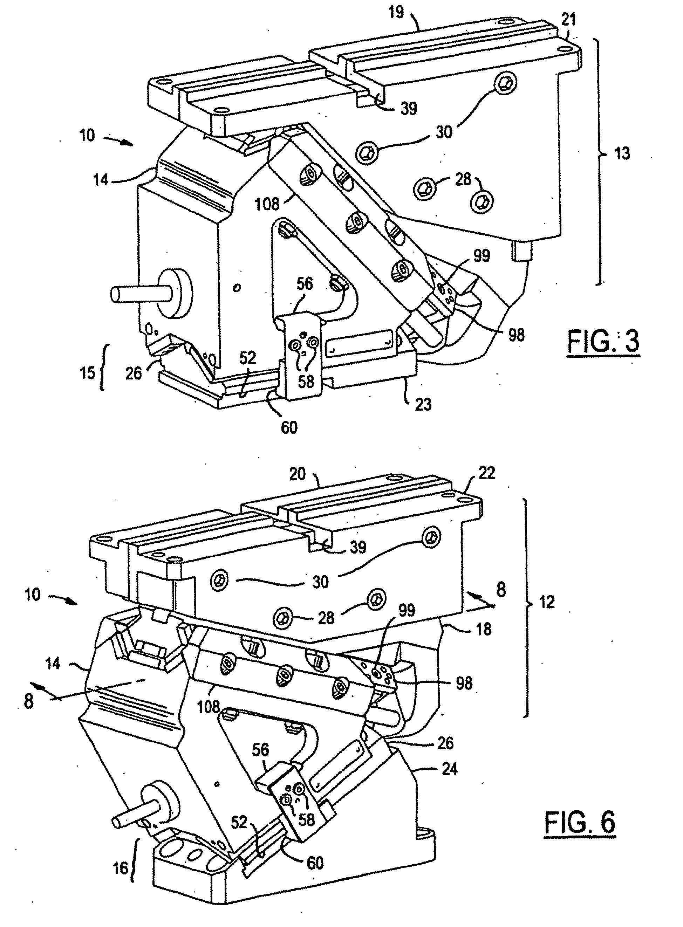

It should be noted that FIGURES 3, 4, 5, 6, 7 and 11 do not reveal all inner details of the cams. FIGURES 1, 2, 8, 9 and 10, however, are exploded and sectional views that do reveal details of inner structures. The figures show side and perspective views of one side and the ends of the cams. Although not shown, respective opposite sides and components and features located there are mirror images of the components and features on the sides that are shown.

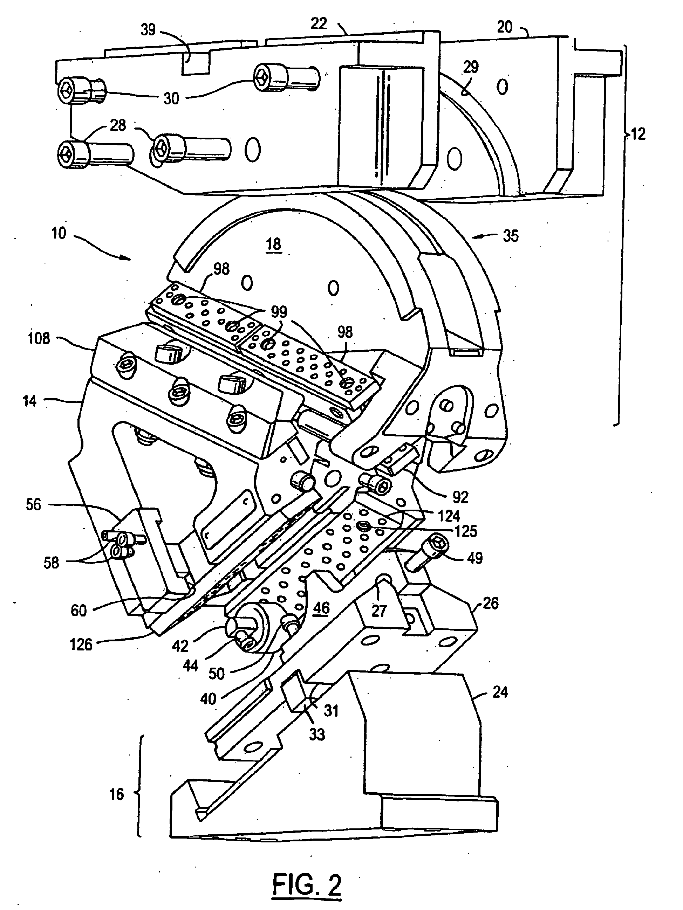

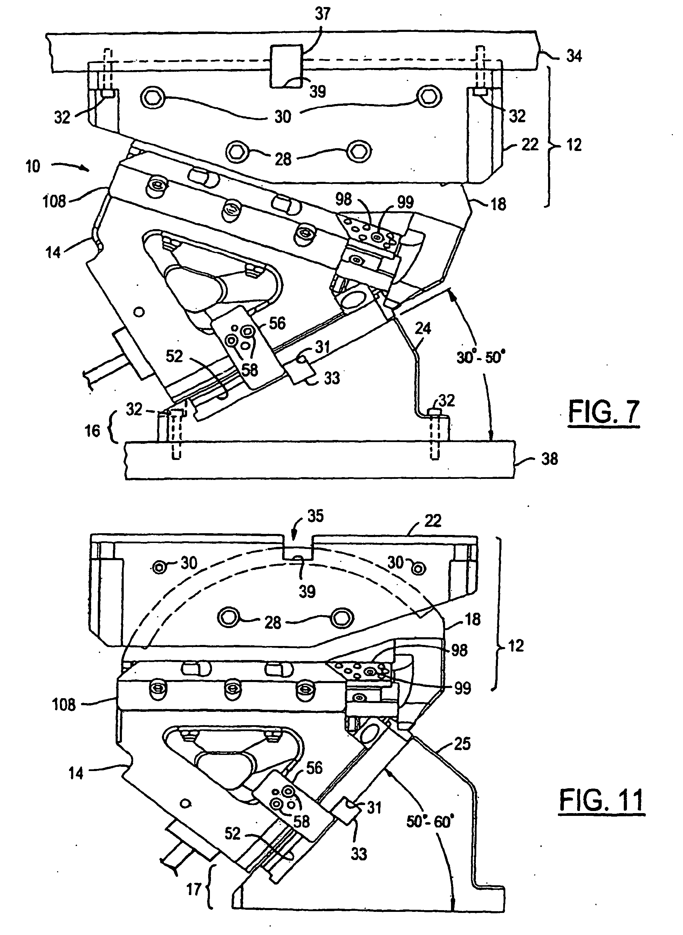

FIGURES 1 and 2 are perspective views of an aerial cam, generally indicated by the reference numeral 10, that is representative of the present invention. The cam 10 includes a cam driving member, or adapter assembly, generally indicated by the reference numeral 12, a tool holding member, or slide, 14, and a driver, generally indicated by the reference numeral 16. The adapter assembly 12 includes a universal adapter 18 for engaging and shifting the slide 14 and also includes opposing side plates 20 and 22. The universal adapter 18 has an arcuate portion, generally indicated by the reference numeral 35, and each side plate 20 and 22 has an arcuate recess 29 complementing the arcuate portion 35 of the universal adapter 18. The arcuate recesses 29 of the side plates 20 and 22 receive the arcuate portion 35 of the universal adapter 18 and allow a continuous rather than an incremental angular adjustment of the universal adapter 18. The universal adapter 18 is then maintained at the desired angle relative to the side plates 20 and 22 with fastening members such as bolts 28 and a key 37 (FIGURE 7) that fits in a keyway 39. The side plates 20 and 22 are also secured to each other by fasteners such as bolts 30 and by fasteners such as bolts 32 (FIGURE 7) to an upper platen 34 (FIGURE 7) of a press (not shown). The driver 16 includes a driver base 24 and a V-block 26. The driver V-block 26, which has a slot 27 extending longitudinally along its apex, is held in position by a key 33 fitting within a keyway 31 (FIGURES 1, 2 and 8) and secured to the driver base 24 by fasteners such as bolts 36 through in the V-block 26. The driver base 24 is secured with fasteners such as bolts 32 (FIGURE 7) to the lower platen 38 (FIGURE 7) of a press (not shown).

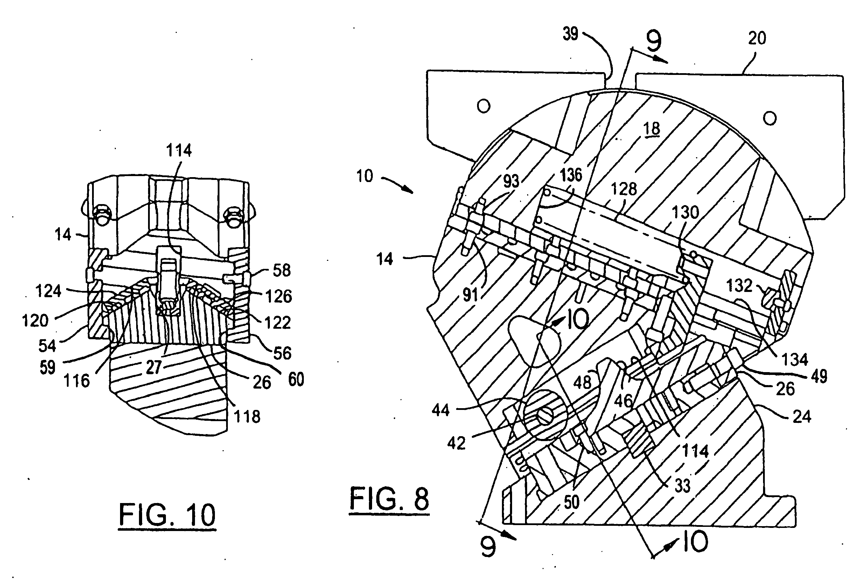

A roller 40 is rotatably supported on a roller shaft 42, which is secured to the slide 14 by fasteners, such as bolts 44 (only one of which shown), passing through the roller shaft 42 and into the slide 14. A ramp 46 having an arcuate ramp surface 48 (FIGURES 1 and 8) is secured to the V-block 26 within the slot 27 by fasteners such as bolts 49 and 50 (FIGURES 2 and 8). The roller 40 cooperatively engages the arcuate ramp surface 48 (FIGURE 1) to advance the slide 14 when the press (not shown) forces the slide 14 and the driver16 together, and the arcuate ramp surface communicates force to the slide. It should be noted that the ramp 46 and the roller 40 are not necessary to the operation of the cam 10 but can be used to gradually redirect a downwardly directed force from the slide toward the stationary V-block 26 to a longitudinally directed force to advance the slide 14.

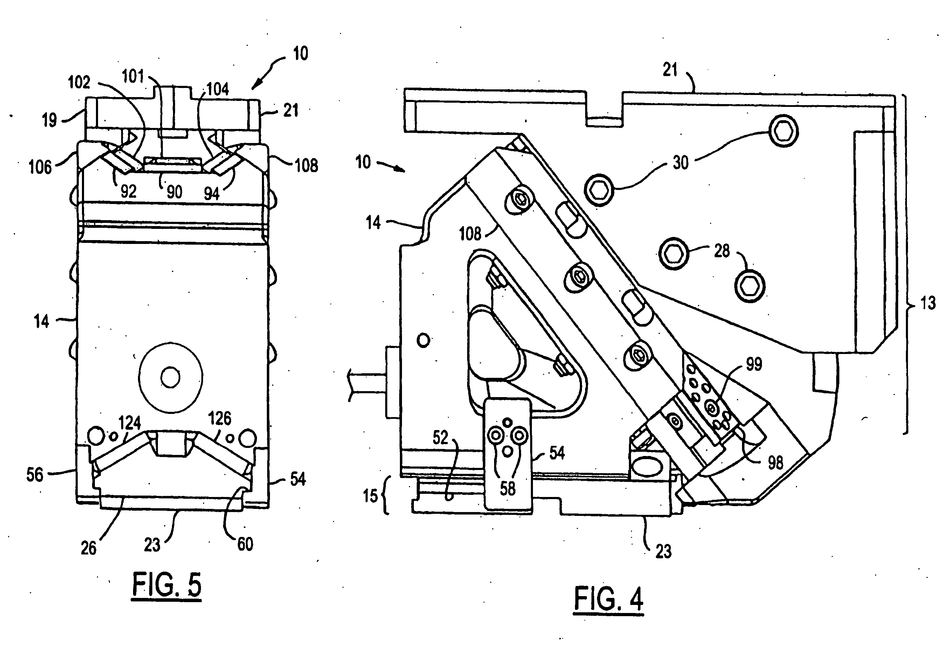

A pair of positive return members 56 (FIGURES 4 and 5) and 54 (FIGURES 5) are secured to the sides of the slide 14 by fasteners such as bolts 58. At ends distal from the bolts 58 securing the positive return members 54 and 56 to the slide 14, the positive return members 54 and 56 each has a generally rectangular projection 59 (FIGURE 10) and 60 (FIGURES 1, 2, 3, 5 and 6). The driver base 24 has an elongate slot 52 (FIGURES 3, 4, 6, 7 and 11), which extends along a portion of each side, into which the projections 59 and 60 slidably extend. The elongate slot 52 extends at the same longitudinal inclination as that of the V-block 26.

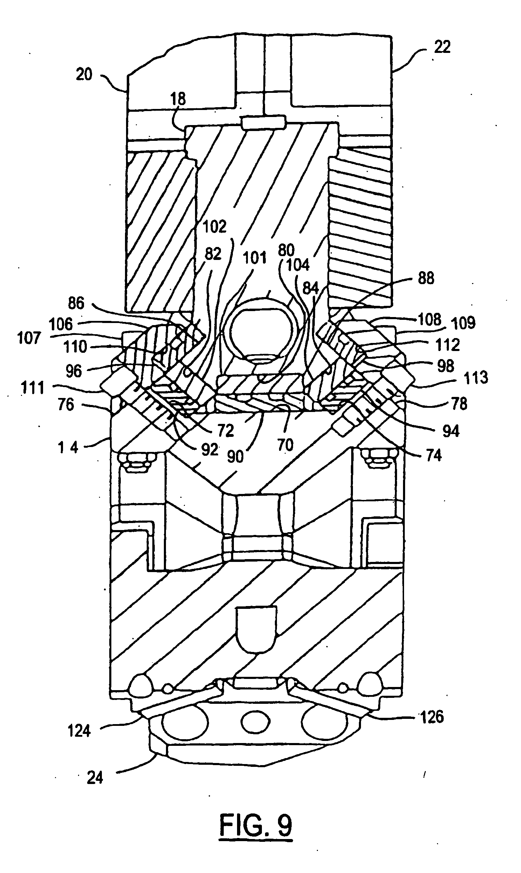

As shown by FIGURE 9, which is a cross-sectional view taken along the line 9-9 of FIGURE 8, the slide 14 has a first group of surfaces arranged in a five-sided configuration that includes a central surface 70, a pair of laterally canted guiding surfaces 72 and 74 along opposite edges of the of the central surface 70, and a pair of oppositely laterally canted coupling surfaces 76 and 78 along the outer edges of the guiding surfaces 72 and 74. The guiding surfaces 72 and 74 are disposed at a right angle relative to the coupling surfaces 76 and 78, and at an obtuse angle to the central surface 70. The central surface 70 is disposed substantially perpendicularly to the direction of major loading forces on the slide 14 and cam assembly 12 (FIGURE 1).

The universal adapter 18 of the adapter assembly 12 (FIGURE 1) has a group of surfaces arranged in a five-sided configuration complementing the five-sided configuration of the first group of surfaces of the slide. The configuration of the universal adapter surfaces includes a central surface 80 opposed to the central surface 70 of the slide 14, a pair of guiding surfaces 82 and 84 along opposite edges of the of the central surface 80 and opposed to the guiding surfaces 72 and 74 of the slide 14, and a pair of coupling surfaces 86 and 88 along the outer edges of the guiding surfaces 82 and 84.

The central surface 70 of the slide 14 has a wear plate 90, preferably formed of a self-lubricating material, secured to it by fasteners such as bolts 91 (FIGURE 8). The guiding surfaces 72 and 74 of the slide 14 have wear plates 92 and 94, respectively, preferably formed of self-lubricating material, secured to them by fasteners such as bolts (not shown). The central surface 80 of the universal adapter 18 has a wear plate 101 secured to it by fasteners such as bolts 93 (FIGURE 8) to slidably contact the opposing wear plate 90. The guiding surfaces 82 and 84 of the universal adapter 18 have wear plates, 102 and 104, respectively, secured to them by fasteners such as bolts (not shown) to slidably contact the opposing wear plates 92 and 94 of the slide 14. The coupling surfaces 86 and 88 of the universal adapter 18 have wear plates 96 and 98, preferably formed of self-lubricating material, secured to them by fasteners such as bolts 99 (FIGURE 2). A pair of keeper plates 106 and 108 are secured to the coupling surfaces 76 and 78 of the slide 14 with fasteners such as bolts 107, 109, 111 and 113. The keeper plates each have a surface 110 and 112 that overlaps and slidably contacts an opposing one of the wear plates 96 and 98 to couple the slide 14 and universal adapter 18 for conjoint movement.

With reference to FIGURE 10, which is a cross-sectional view taken along the line 10-10 of FIGURE 8, the slide 14 has a slot 114 opposite the slot 27 within the V-block 26. The roller 44 and the ramp 46 (FIGURE 8) reside partially within the slot 114. A pair of guiding surfaces 116 and 118 extend along the edge of the slot 114 in the slide 14, and a pair of guiding surfaces 120 and 122 extend along the slot 27 in the V-block , opposing the guiding surfaces 116 and 118 of the slidel4. A pair of wear plates 124 and 126, preferably formed of self-lubricating material, are secured to the pair of guiding surfaces 116 and 118 of the driver 14 with fasteners such as bolts 125 (FIGURE 2) for slidably contacting the opposing guiding surfaces 120 and 122 of the V-block.

As shown by the sectional view of FIGURE 8, the universal adapter 18 of the cams of the present invention has a channel such as a slotted bore 134 and includes a resilient member, such as a coil spring 128 or a gas spring (not shown), mounted on a spring bracket 130 secured to the slide 14. The coil spring 128 extends through the bore 134 and compresses against a closed end 136 of the bore 134 when the slide 14 advances. The slide 14 is urged by the spring 128 to retract as the latter decompresses. Also shown is a shock absorbing member, such as a resilient bumper or a hydraulic shock absorber, 132 secured to the universal adapter 18 to cushion the retracting spring bracket 130 and slide 14 as the latter reaches its retracted position.

With reference again to FIGURES 1 and 2, during cam assembly, the angular relationship of the universal adapter 18 to the side plates 20 and 22 is adjusted to accommodate the longitudinal inclination angle of a specified driver 16. In the portion 35 of the universal adapter 18 having an arcuate configuration, a keyway is formed to coincide with the keyway 39 in the side plates 20 and 22 and to receive a key 37 (FIGURE 7). Holes are drilled through the side plates 20 and 22 into the universal adapter 18, and bolts 28 (FIGURE 7) are inserted to maintain, with the key 37, the position of the universal adapter 18 relative to the side plates 20 and 22.

A representative tool 64 is shown mounted on the slide 14 with a representative tool holder 66. The driver 24, as shown by FIGURES 1, 2 and 6 through 10, has a longitudinal inclination of 30 degrees. The slide 14, and the tool 64 attached to it will be advanced at that angle. The configurations of the universal adapter 18 and the side plates 20 and 22 of the adapter assembly 12 are such that a driver 16 having a longitudinal inclination from 30 to 50 degrees can be accommodated using the same slide 14 and adapter assembly 12.

FIGURES 3, 4 and 5 show a driver 15 having an uninclined driver base 23. The side plates 19 and 21 are shaped somewhat differently from those (20 and 22) used with drivers of different longitudinal inclinations, but the slide 14 and the universal adapter 18 of the adapter assembly 13 are the same. The configurations of the universal adapter 18 and the side plates 19 and 21 are such that a driver 15 having a longitudinal inclination from zero to 30 degrees can be accommodated using the same slide 14 and universal adapter 18.

FIGURE 11 shows a driver 17 having a longitudinal inclination of 50 degrees. The side plates (represented by the one plate 22 shown) are the same as those used with drivers 16 having a longitudinal inclination from 30 to 50 degrees, but they are reversed from right to left as viewed. The configurations of the universal adapter 18 and the side plates 20 and 22 are such that a driver 17 having a longitudinal inclination from 50 to 60 degrees can be accommodated using the same slide 14 and adapter assembly 12.

The aerial cam 10 shown by FIGURES 1 and 2 will now be used in describing the operation of the cam. When the side plates 20 and 22 of the adapter assembly 12 are pressed downwardly by the upper platen 34 (FIGURE 7) of the press (not shown), the universal cam 18 secured to the side plates 20 and 22 exerts attending forces upon the central surface 70 and the guiding surfaces 72 and 74 of the slide 14. The slide 14, in turn, exerts forces upon the guiding surfaces 120 and 122 (FIGURE 10) of the driver V-block 26. Since, in all the aerial cam configurations described and claimed, at least one interface between the universal adapter 18 and the slide 14 and between the slide 14 and the driver V-block 26 is longitudinally inclined relative to the horizontal, a laterally directed component force advances the slide 14. The tool 64 secured to the slide 14 by the tool holder 66 is advanced toward a workpiece (not shown).

When the side plates 20 and 22 are pulled upwardly by the upper platen 34 (FIGURE 7) of the press (not shown), the universal cam 18 secured to the side plates 20 and 22 exerts upward forces upon the surfaces 110 and 112 of the keeper plates 76 and 78, which are secured to the slide 14. The resulting upward movement of the universal cam 18 removes the load force from the slide 14; and the compressed spring 128, while expanding, urges the slide 14 to retract. Also secured to the slide 14 are the positive return members 54 and 56 (FIGURE 5) the projections 59 (FIGURE 10) and 60 (FIGURES 1, 2, 3, 5, 6 and 10) of which slidably reside within the elongate slots (only the slot 52 being shown by FIGURES 3, 4, 6, 7 and 11) that extend along a portion of each side of the driver V-block 26. When the slide 14 is pulled upwardly, an upward force is exerted on the driver 16 by the projections 59 (FIGURE 10) and 60 (FIGURES 1, 2, 3, 5, 6 and 10). Since the driver 16 is anchored by the lower platen 38 of the press (not shown), the slide 14 is forced to retract in a direction parallel to the longitudinal inclinations of the V-block 26 and the elongate slot 52. The positive return members 54 and 56 (FIGURE 5) thus provide a positive, additional means for retracting the slide 14.

Since die-mount cams are effectively an inverted embodiment of the aerial cam 10, their operation is basically the same as that of the aerial cam 10 previously described.

As a result of the described configurations of the aerial and die-mount cams having components that do not require custom fitting, there is an increase in production and on-site assembly efficiencies that saves costs and time while providing precision, stable and long-lasting cams capable of bearing heavy loads.

While embodiments of the invention have been illustrated and described, it is not intended that these embodiments illustrate and describe all possible forms of the invention. Rather, the words used in the specification are words of description rather than limitation, and it is understood that various changes may be made without departing from the scope of the appended claims.

## Claims

1. Universal aerial or die-mount cam, comprising:
a slide (14) and an adapter assembly (12) arranged in vertically stacked relation;
slidably arranged bearing surfaces ( 70, 72, 74, 76, 78, 80, 82, 84, 86, 88) between the slide (14) and the adapter assembly (12) for coupling the slide (14) and the adapter assembly (12) and for relative sliding movement upon closing and opening of platens (34, 38) of a press between which the cam (10) can be arranged;
additional bearing surfaces (116, 118) on the slide (14) arranged for relative sliding movement between the slide (14) and a driver (16),
**characterized in that**
a portion (35) of the adapter assembly (12) being angularly and continuously adjustable to enable one slide (14) to accommodate different drivers (15, 16, 17) having bearing surfaces ranging from being uninclined to the horizontal to being inclined at an acute angle,
wherein said adjustment to different angles of inclination is obtainable with the same portion (35) of the adapter assembly (12), and
wherein the adapter assembly (12) comprises:
a universal adapter (18) for engaging and shifting the slide (14) and having an arcuate portion (35); and
a pair of opposing side plates (20, 22) each having an arcuate recess (29) complementing the arcuate portion (35) of the universal adapter (18) to receive the arcuate portion (35) of the universal adapter (18), to allow a continuous angular adjustment of the universal adapter (18) in the plane of motion of the slide (14), and to maintain a desired angular adjustment, wherein each arcuate recess (29) contacts a radially outer circumferential surface of the arcuate portion (35).

2. The universal aerial or die-mount cam defined by claim 1, wherein:
the slide (14) has bearing surfaces (70, 72, 74, 76, 78) arranged in a five-sided configuration having a central surface (70) with a pair of guiding surfaces (72, 74) along opposite edges of the central surface and a pair of coupling surfaces (76, 78) along the outer edges of the surfaces, the guiding surfaces (72, 74) being disposed at a right angle to the coupling surfaces (76, 78) and at an obtuse angle to the central surface (70);
the universal adapter (18) has bearing surfaces (80, 82, 84, 86, 88) arranged in a five-sided configuration complementing the five-sided configuration of the slide (14) and including a central surface (80) opposed to the central surface (70) of the slide (14), a pair of guiding surfaces (82, 84) along opposite edges of the central surface (80) of the cam adapter (18) opposed to the guiding surfaces (72, 74) of the slide (14), and a pair of coupling surfaces (86, 88) along the outer edges of the last mentioned guiding surfaces, the central surfaces (70, 80) being disposed substantially perpendicularly to the direction of major loading forces on the slide (14) and cam assembly; and
the slide (14) further has a pair of keeper plates (106, 108), each being secured to a different one of the pair of coupling surfaces (76, 78) of the slide (14) and slidably overlapping an opposing coupling surface (86, 88) of the universal adapter (18) to connect the slide (14) and universal adapter (18) for conjoint movement.

3. The universal aerial or die-mount cam defined by claim 2, wherein the adapter assembly (12) further comprises at least one fastening member (28) to maintain a desired angular relationship between the universal adapter (18) and the side plates (20, 22).

4. The universal aerial or die-mount cam defined by claim 1, further comprising opposed double wear plates (90, 92, 94, 101, 102, 104) secured to the opposed central (70, 80) and guiding surfaces (72, 74, 82, 84), and a wear plate (96, 98) secured to each of the coupling surfaces (86, 88) of the universal adapter (18).

5. The universal aerial or die-mount cam defined by claim 1, further comprising a resilient member (128) that is compressed when the slide (14) is advanced and that expands to retract the slide (14).

6. The universal aerial or die-mount cam defined by claim 5, wherein the resilient member (128) is a coil spring.

7. The universal aerial or die-mount cam defined by claim 5, wherein the resilient member (128) is a gas spring.

8. The universal aerial or die-mount cam defined by claim 5, further including a shock absorbing member (132) to cushion the retracting slide (14) as the latter reaches its retracted position.

9. The universal aerial or die-mount cam defined by claim 8, wherein the shock absorbing member (132) is a resilient bumper.

10. The universal aerial or die-mount cam defined by claim 8, wherein the shock absorbing member (132) is a hydraulic shock absorber.

11. The universal aerial or die-mount cam defined by claim 1, further comprising:
a driver (16) for engaging and shifting the slide (14),
the driver (16) having a pair of laterally canted bearing surfaces (120, 122); and
the slide (14) having laterally canted bearing surfaces (116, 118) arranged in a two-sided configuration complementing and opposing the pair of laterally canted bearing surfaces of the driver (16).

12. The universal aerial or die-mount cam defined by claim 11, wherein the driver (16) comprises a driver base (24) and a V-block (26) supported by the driver base (24), the V-block (26) having the pair of laterally canted bearing surfaces (120, 122) opposing the pair of laterally canted bearing surfaces (116, 118) of the slide (14).

13. The universal aerial or die-mount cam defined by claim 11, the slide (14) further comprising a pair of wear plates (124, 126), each of the wear plates secured to a one of the laterally canted bearing surfaces (116, 118) of the slide (14).

14. The universal aerial or die-mount cam defined by claim 13, further comprising:
a positive return member (54, 56) secured to each side of the slide (14), each positive return member having a projection (59), and
the driver base (24) of the driver (16) having an elongate slot (52) that extends along a portion of each side at the same longitudinal inclination as that of the laterally canted bearing surfaces (120, 122), the projections (59) of the positive return member (54, 56) being slidably received within each elongate slot (52).

15. The universal aerial or die-mount cam described by claim 11, further comprising:
a roller (40) rotatably supported by the slide (14); and
a ramp (46) having an arcuate ramp surface (48) and being secured to the driver (16), the roller (40) cooperatively engaging the arcuate ramp surface (48) to advance the slide (14) when the press forces the slide (14) and the driver assembly (16) together, the arcuate ramp surface (48) communicating force to accelerate the slide (14) gradually.

## Patentansprüche

1. Universaler Oberteil- oder Unterteilschieber, der aufweist:
einen Gleitkörper (14) und eine Adapter-Baugruppe (12), die vertikal übereinander angeordnet sind;
verschiebbar angeordnete Lagerflächen (70, 72, 74, 76, 78, 80, 82, 84, 86, 88) zwischen dem Gleitkörper (14) und der Adapter-Baugruppe (12) zum Koppeln des Gleitkörpers (14) und der Adapter-Baugruppe (12) und für relative Gleitbewegung beim Schließen und Öffnen von Druckplatten (34, 38) einer Presse, zwischen denen der Schieber (10) angeordnet werden kann;
zusätzlich Lagerflächen (116, 118) an dem Gleitkörper (14), die für relative Gleitbewegung des Gleitkörpers (14) und eines Mitnehmers (16) zueinander eingerichtet sind,
**dadurch gekennzeichnet, dass**
ein Abschnitt (35) der Adapter-Baugruppe (12) bezüglich des Winkels stufenlos eingestellt werden kann, um zu ermöglichen, dass sich ein Gleitkörper (14) an unterschiedliche Mitnehmer (15, 16, 17) anpasst, die Lagerflächen haben, deren Neigung von nicht vorhandener Neigung zur Horizontalen bis zu in einem spitzen Winkel reicht,
wobei die Einstellung auf verschiedene Neigungswinkel mit dem gleichen Abschnitt (35) der Adapter-Baugruppe (12) erreicht werden kann, und
wobei die Adapter-Baugruppe (12) aufweist:
einen Universal-Adapter (18), der mit dem Gleitkörper (14) in Eingriff kommt und ihn verschiebt und einen bogenförmigen Abschnitt (35) aufweist; und
ein Paar einander gegenüberliegender Seitenplatten (20, 22), die jeweils eine bogenförmige Vertiefung (29) haben, die komplementär zu dem bogenförmigen Abschnitt (35) des Universal-Adapters (18) ist, um den bogenförmigen Abschnitt (35) des Universal-Adapters (18) aufzunehmen und eine stufenlose Winkeleinstellung des Universal-Adapters (18) in der Bewegungsebene des Gleitkörpers (14) zu ermöglichen und eine gewünschte Winkeleinstellung aufrechtzuerhalten, wobei jede bogenförmige Vebtiefung (29) mit einer radial außenliegenden Umfangsfläche des bogenförmigen Abschnitts (35) in Kontakt kommt.

2. Universaler Oberteil- oder Unterteilschieber nach Anspruch 1, wobei:
der Gleitkörper (14) Lagerflächen (70, 72, 74, 76, 78) hat, die in einer fünfseitigen Form angeordnet sind, die eine Mittelfläche (70) mit einem Paar Führungsflächen (72, 74) an einander gegenüberliegenden Kanten der Mittelfläche und ein Paar Kopplungsflächen (76, 78) an den Außenkanten der Flächen aufweist, wobei die Führungsflächen (72, 74) in einem rechten Winkel zu den Kopplungsflächen (76, 78) und einem stumpfen Winkel zu der Mittelfläche (70) angeordnet sind;
der Universal-Adapter (18) Lagerflächen (80, 82, 84, 86, 88) aufweist, die in einer fünfseitigen Form angeordnet sind, die komplementär zu der fünfseitigen Form des Gleitkörpers (14) ist und eine Mittelfläche (80), die der Mittelfläche (70) des Gleitkörpers gegenüberliegt, ein Paar Führungsflächen (82, 84) an einander gegenüberliegenden Kanten der Mittelfläche (80) des Schieber-Adapters (18), die den Führungsflächen (72, 74) des Gleitkörpers (14) gegenüberliegen, sowie ein Paar Kopplungsflächen (86, 88) an den Außenkanten letzterer Führungsflächen enthält, wobei die Mittelflächen (70, 80) im Wesentlichen senkrecht zu der Richtung von Haupt-Lastkräften an der Baugruppe aus Gleitkörper (14) und Schieber angeordnet sind; und
der Gleitkörper (14) des Weiteren ein Paar Halteplatten (106, 108) aufweist, die jeweils an einer anderen des Paars von Kopplungsflächen (76, 78) des Gleitkörpers (14) befestigt sind und eine gegenüberliegende Kopplungsfläche (86, 88) des Universal-Adapters (18) gleitend überdecken, um den Gleitkörper (14) und den Universal-Adapter (18) für gemeinsame Bewegung zu verbinden.

3. Universaler Oberteil- oder Unterteilschieber nach Anspruch 2, wobei die Adapter-Baugruppe (12) des Weiteren wenigstens ein Befestigungselement (28) umfasst, das eine gewünschte Winkelbeziehung zwischen dem Universal-Adapter (18) und den Seitenplatten (20, 22) aufrechterhält.

4. Universaler Oberteil- oder Unterteilschieber nach Anspruch 1, der des Weiteren einander gegenüberliegende doppelte Verschleißplatten (90, 92, 94, 101, 102, 104), die an den einander gegenüberliegenden Mittelflächen (70, 80) und Führungsflächen (72, 74, 82, 84) befestigt sind, sowie eine Verschleißplatte (96, 98) umfasst, die an jeder der Kopplungsflächen (86, 88) des Universal-Adapters (18) befestigt ist.

5. Universaler Oberteil- oder Unterteilschieber nach Anspruch 1, der des Weiteren ein elastisches Element (128) umfasst, das zusammengedrückt wird, wenn der Gleitkörper (14) ausgefahren wird, und das sich ausdehnt, um den Gleitkörper (14) einzufahren.

6. Universaler Oberteil- oder Unterteilschieber nach Anspruch 5, wobei das elastische Element (128) eine Schraubenfeder ist.

7. Universaler Oberteil- oder Unterteilschieber nach Anspruch 5, wobei das elastische Element (128) eine Gasfeder ist.

8. Universaler Oberteil- oder Unterteilschieber nach Anspruch 5, der des Weiteren ein Stoßdämpfelement (132) enthält, mit dem der einfahrende Gleitkörper (14) abgefedert wird, wenn er seine eingefahrene Position erreicht.

9. Universaler Oberteil- oder Unterteilschieber nach Anspruch 8, wobei das stoßdämpfende Element (132) ein elastischer Puffer ist.

10. Universaler Oberteil- oder Unterteilschieber nach Anspruch 8, wobei das stoßdämpfende Element (132) ein hydraulischer Stoßdämpfer ist.

11. Universaler Oberteil- oder Unterteilschieber nach Anspruch 1, der des Weiteren aufweist:
einen Mitnehmer (16), der mit dem Gleitkörper (14) in Eingriff kommt und ihn verschiebt,
wobei der Mitnehmer (16) ein Paar seitlich geneigter Lagerflächen (120, 122) hat; und
der Gleitkörper (14) seitlich geneigte Lagerflächen (116, 118) hat, die in einer zweiseitigen Form komplementär zu dem Paar seitlich geneigter Lagerflächen des Mitnehmers (16) und ihnen gegenüberliegend angeordnet sind.

12. Universaler Oberteil- oder Unterteilschieber nach Anspruch 11, wobei der Mitnehmer (16) einen Mitnehmer-Sockel (24) und einen V-Block (26) umfasst, der von dem Mitnehmer-Sockel (24) getragen wird, und der V-Block (26) ein Paar seitlich geneigter Lagerflächen (120, 122) hat, die dem Paar seitlich geneigter Lagerflächen (116, 118) des Gleitkörpers (14) gegenüberliegen.

13. Universaler Oberteil- oder Unterteilschieber nach Anspruch 11, wobei der Gleitkörper (14) des Weiteren ein Paar Verschleißplatten (124, 126) umfasst und jede der Verschleißplatten an einer der seitlich geneigten Lagerflächen (116, 118) des Gleitkörpers (14) befestigt ist.

14. Universaler Oberteil- oder Unterteilschieber nach Anspruch 13, der des Weiteren aufweist:
ein formschlüssiges Rückstellelement (54, 56), das an jeder Seite des Gleitkörpers (14) befestigt ist, wobei jedes formschlüssige Rückstellelement einen Vorsprung (59) aufweist, und
der Mitnehmer-Sockel (24) des Mitnehmers (16) einen länglichen Schlitz (52) aufweist, der sich an einem Abschnitt jeder Seite in der gleichen Längsneigung wie der der seitlich geneigten Lagerflächen (120, 122) erstreckt, wobei die Vorsprünge (59) des formschlüssigen Rückstellelementes (54, 56) verschiebbar in jedem länglichen Schlitz (52) aufgenommen sind.

15. Universaler Oberteil- oder Unterteilschieber nach Anspruch 11, der des Weiteren aufweist:
eine Rolle (40), die drehbar von dem Gleitkörper (14) getragen wird; und
eine Rampe (46), die eine bogenförmige Rampenfläche (48) hat und an dem Mitnehmer (16) befestigt ist, wobei die Rolle (40) zusammenwirkend mit der bogenförmigen Rampenfläche (48) in Eingriff kommt, um den Gleitkörper (14) auszufahren, wenn die Presse den Gleitkörper (14) und die Mitnehmer-Baugruppe (16) zusammendrückt, wobei die bogenförmige Rampenfläche (48) Kraft überträgt, um den Gleitkörper (14) allmählich zu beschleunigen.

## Revendications

1. Came universelle aérienne ou montée sur outil, comprenant :
un coulisseau (14) et un ensemble adaptateur (12) superposés à la verticale ;
des surfaces porteuses (70, 72, 74, 76, 78, 80, 82, 84, 86, 88) disposées coulissantes entre le coulisseau (14) et l'ensemble adaptateur (12) pour l'accouplement dudit coulisseau (14) et dudit ensemble adaptateur (12) et pour un mouvement coulissant relatif lors de la fermeture et de l'ouverture de plateaux (34, 38) d'une presse entre lesquels la came (10) peut être disposée ;
des surfaces porteuses supplémentaires (116, 118) sur le coulisseau (14), qui sont disposées pour un mouvement coulissant relatif entre le coulisseau (14) et un dispositif d'entraînement (16),
**caractérisée en ce qu'**une partie (35) de l'ensemble adaptateur (12) offre une possibilité de réglage angulaire et continu pour permettre à un coulisseau (14) de recevoir des organes d'entraînement (15, 16, 17) différents qui présentent des surfaces porteuses allant de non inclinées par rapport à l'horizontale à inclinées suivant un angle aigu,
étant précisé que le réglage suivant des angles d'inclinaison différents peut être obtenu avec la même partie (35) de l'ensemble adaptateur (12),
et que l'ensemble adaptateur (12) comprend :
un adaptateur universel (18) qui est destiné à venir en contact avec le coulisseau (14) et à le soulever et qui a une partie arquée (35) ; et
une paire de plaques latérales opposées (20, 22) qui ont chacune un creux arqué (29) complémentaire de la partie arquée (35) de l'adaptateur universel (18) afin de recevoir ladite partie arquée (35) de l'adaptateur universel (18), pour permettre un réglage angulaire continu dudit adaptateur universel (18) dans le plan de mouvement du coulisseau (14), et pour maintenir un réglage angulaire voulu, chaque creux arqué (29) touchant une surface circonférentielle radialement extérieure de la partie arquée (35).

2. Came universelle aérienne ou montée sur outil définie par la revendication 1, dans laquelle :
le coulisseau (14) a des surfaces porteuses (70, 72, 74, 76, 78) disposées suivant une configuration à cinq pans qui présente une surface centrale (70) avec une paire de surfaces de guidage (72, 74), le long de bords opposés de celle-ci, et une paire de surfaces d'accouplement (76, 78) le long des bords extérieurs des surfaces, les surfaces de guidage (72, 74) étant disposées à angle droit par rapport aux surfaces d'accouplement (76, 78) et suivant un angle obtus par rapport à la surface centrale (70) ;
l'adaptateur universel (18) a des surfaces porteuses (80, 82, 84, 86, 88) disposées suivant une configuration à cinq pans complémentaire de celle du coulisseau (14) et comprenant une surface centrale (80) qui fait face à la surface centrale (70) du coulisseau (14), une paire de surfaces de guidage (82, 84) le long des bords opposés de la surface centrale (80) de l'adaptateur de came (18), en face des surfaces de guidage (72, 74) du coulisseau (14), et une paire de surfaces d'accouplement (86, 88) le long des bords extérieurs des dernières surfaces de guidage mentionnées, les surfaces centrales (70, 80) étant disposées globalement perpendiculairement par rapport à la direction de forces de charge majeures sur le coulisseau (14) et l'ensemble de came ; et
le coulisseau (14) a par ailleurs une paire de plaques de maintien (106, 108), chacune étant fixée à l'une des deux surfaces d'accouplement (76, 78) du coulisseau (14) et recouvrant de manière coulissante une surface d'accouplement opposée (86, 88) de l'adaptateur universel (18) pour relier le coulisseau (14) et l'adaptateur universel (18) en vue d'un mouvement conjoint.

3. Came universelle aérienne ou montée sur outil définie par la revendication 2, dans laquelle l'ensemble adaptateur (12) comprend par ailleurs au moins un élément de fixation (28) pour maintenir une relation angulaire voulue entre l'adaptateur (18) et les plaques latérales (20, 22).

4. Came universelle aérienne ou montée sur outil définie par la revendication 1, comprenant par ailleurs des plaques d'usure doubles opposées (90, 92, 94, 101, 102, 104) fixées aux surfaces centrales (70, 80) et aux surfaces de guidage (72, 74, 82, 84), et une plaque d'usure (96, 98) fixée à chacune des surfaces d'accouplement (86, 88) de l'adaptateur universel (18).

5. Came universelle aérienne ou montée sur outil définie par la revendication 1, comprenant par ailleurs un élément élastique (128) qui est comprimé quand le coulisseau (14) est avancé et qui se détend pour rétracter le coulisseau (14).

6. Came universelle aérienne ou montée sur outil définie par la revendication 5, dans laquelle l'élément élastique (128) est constitué par un ressort hélicoïdal.

7. Came universelle aérienne ou montée sur outil définie par la revendication 5, dans laquelle l'élément élastique (128) est constitué par un ressort pneumatique.

8. Came universelle aérienne ou montée sur outil définie par la revendication 5, contenant par ailleurs un élément amortisseur (132) pour amortir la rétraction du coulisseau (14) quand celui-ci atteint sa position rétractée.

9. Came universelle aérienne ou montée sur outil définie par la revendication 8, dans laquelle l'élément amortisseur (132) est constitué par un tampon élastique.

10. Came universelle aérienne ou montée sur outil définie par la revendication 8, dans laquelle l'élément amortisseur (132) est constitué par un amortisseur hydraulique.

11. Came universelle aérienne ou montée sur outil définie par la revendication 1, comprenant par ailleurs :
un dispositif d'entraînement (16) pour venir en contact avec le coulisseau (14) et le soulever,
le dispositif d'entraînement (16) ayant une paire de surfaces porteuses inclinées latéralement (120, 122) ; et
le coulisseau (14) ayant des surfaces porteuses inclinées latéralement (116, 118) qui sont disposées suivant une configuration à deux pans qui est complémentaire de celle de la paire de surfaces porteuses inclinées latéralement du dispositif d'entraînement (16) et qui fait face à celle-ci.

12. Came universelle aérienne ou montée sur outil définie par la revendication 11, dans laquelle le dispositif d'entraînement (16) comprend une base d'entraînement (24) et un bloc en V (26) supporté par celle-ci, le bloc en V (26) ayant la paire de surfaces porteuses inclinées latéralement (120, 122) qui fait face à la paire de surfaces porteuses inclinées latéralement (116, 118) du coulisseau (14).

13. Came universelle aérienne ou montée sur outil définie par la revendication 11, le coulisseau (14) comprenant par ailleurs une paire de plaques d'usure (124, 126) qui sont fixées chacune à l'une des surfaces porteuses inclinées latéralement (116, 118) du coulisseau (14).

14. Came universelle aérienne ou montée sur outil définie par la revendication 13, comprenant par ailleurs :
un élément de retour positif (54, 56) fixé à chaque côté du coulisseau (14), chaque élément de retour positif ayant une partie saillante (59), et
la base (24) du dispositif d'entraînement (16) ayant une fente oblongue (52) qui s'étend le long d'une partie de chaque côté avec la même inclinaison longitudinale que les surfaces porteuses inclinées latéralement (120, 122), les parties saillantes (59) de l'élément de retour positif (54, 56) étant logées de manière coulissante dans chaque fente oblongue (52).

15. Came universelle aérienne ou montée sur outil définie par la revendication 11, comprenant :
un galet (40) supporté en rotation par le coulisseau (14) ; et
une rampe (46) qui a une surface de rampe arquée (48) et qui est fixée au dispositif d'entraînement (16), le galet (40) venant en contact de manière coopérante avec la surface de rampe arquée (48) pour avancer le coulisseau (14) quand la presse rapproche le coulisseau (14) et l'ensemble d'entraînement (16), la surface de rampe arquée (48) communiquant une force pour accélérer le coulisseau (14) progressivement.
